# EUROPÄISCHE PATENTSCHRIFT

(11) **EP 2 139 670 B1**
(45) Veröffentlichungstag und Bekanntmachung des Hinweises auf die Patenterteilung: **29.01.2014**
(21) Anmeldenummer: 08716460.4
(22) Anmeldetag: 12.03.2008
(51) Int. Cl.: B29C 70/52, B29C 70/56

(54) **VERFAHREN UND VORRICHTUNG ZUR HERSTELLUNG EINES KUNSTSTOFFPROFILS**
METHOD AND DEVICE FOR THE PRODUCTION OF A PLASTIC PROFILE
PROCÉDÉ ET DISPOSITIF DE FABRICATION DE PROFILÉ EN PLASTIQUE

(30) Priorität: 23.03.2007 DE 102007014578
(43) Veröffentlichungstag der Anmeldung: 06.01.2010
(73) Patentinhaber: Thomas GmbH + Co. Technik + Innovation KG, 27432 Bremervörde (DE)
(72) Erfinder: JANSEN, Klaus, 21614 Buxtehude (DE); WEIDLER, Dietmar, 27432 Bremervörde (DE); HOFFMANN, Marian, 27432 Bremervörde (DE)
(74) Vertreter: Möller, Friedrich
(86) Internationale Anmeldenummer: PCT/EP2008/001954
(87) Internationale Veröffentlichungsnummer: WO 2008/116560

(56) Entgegenhaltungen:
- EP-A- 0 158 118
- FR-A- 2 256 656
- FR-A- 2 561 167
- US-A- 3 873 399

## Beschreibung

Die Erfindung betrifft ein Verfahren zum Herstellen eines vorzugsweise gekrümmten Kunststoffprofils gemäß dem Oberbegriff des Anspruchs 1 sowie eine Vorrichtung zur Herstellung eines vorzugsweise gekrümmten Kunststoffprofils gemäß dem Oberbegriff des Anspruchs 11.

Gerade Kunststoffprofile aus Kunststoff und einer durchgehenden Verstärkung aus Fasern, Geweben und/oder Gewirken, die in den Kunststoff eingebettet sind, werden überwiegend durchgehend in einem Strang hergestellt. Dieses geschieht üblicherweise im Pultrusionsverfahren. Dazu wird der mindestens eine Strang durch eine Form hindurchgeführt. In der Form wird der Strang mit flüssigem Kunststoff versehen, der anschließend in der Form aushärtet. Das die Form verlassende, ausgehärtete Kunststoffprofil wird durch eine in Herstellungsrichtung vor der Form angeordnete Abzieheinrichtung durch die Form gezogen und dabei gleichzeitig abtransportiert. Dadurch, dass das Kunststoffprofil von der Abzieheinrichtung durch die Form gezogen wird, lassen sich bei bekannten Verfahren der beschriebenen Art, insbesondere bei bekannten Pultrusionsverfahren, nur gerade Kunststoffprofile bilden.

Die US 3 873 399 A offenbart ein Verfahren und eine Vorrichtung zur Herstellung eines gekrümmten Kunststoffprofils. Es kann damit aber nur ein ganz spezielles kreisbogenförmig gekrümmtes Kunststoffprofil mit einem festgelegten Radius hergestellt werden. Kunststoffprofile mit anderen Verläufen lassen sich hiermit nicht herstellen.

Der Erfindung liegt nun die Aufgabe zugrunde, ein Verfahren und eine Vorrichtung zur einfacheren Herstellung individuell gekrümmter Kunststoffprofile zu schaffen.

Ein Verfahren zur Lösung dieser Aufgabe weist die Maßnahme des Anspruchs 1 auf. Demnach ist vorgesehen, dass die Form periodisch relativ zum stillstehenden Kunststoffprofil bewegt wird. Da die Form ohnehin an den zwei- oder dreidimensional gekrümmten Verlauf des Kunststoffprofils angepasst ist, kann sie dem gekrümmten Verlauf des Kunststoffprofils folgen. Durch das Weiterbewegen der Form relativ zum Kunststoffprofil tritt ein Abschnitt des fertiggestellten und ausgehärteten Kunststoffprofils aus der Form heraus, ohne dass wie bisher das Kunststoffprofil durch die Form gezogen werden muss und dadurch mit einer Zugspannung belastet wird, die es nicht zulässt, gekrümmte Profile wie beim Stand der Technik zu bilden.

Es ist vorgesehen, das Kunststoffprofil, und zwar einen bereits fertiggestellten und ausreichend ausgehärteten Abschnitt desselben, während der Bewegung der Form festzuhalten durch beispielsweise mindestens ein Haltemittel. Dadurch kann die Form auf dem Kunststoffprofil entlang gleiten und eine Relativbewegung zwischen dem durch das Festhalten stillstehende Kunststoffprofil und der demgegenüber bewegten Form zustande kommen. Auf diese Weise werden quasi kontinuierlich Abschnitte des Kunststoffprofils hergestellt und nach und nach aufeinanderfolgende Abschnitte des fortlaufenden Kunststoffprofils entformt.

Es ist weiterhin vorgesehen, dass die Form hin- und herbewegt wird und dabei in einer Richtung sich relativ zum stillstehenden, nämlich gehaltenen Kunststoffprofil bewegt. Demzufolge führt die Form eine schrittweise Bewegung aus. Dabei wird in aufeinanderfolgenden Schritten nach und nach ein neu hergestellter Abschnitt des Kunststoffprofils aus der Form herausgeschoben.

Bei einer bevorzugten Ausgestaltung des Verfahrens findet eine Relativbewegung der Form zum Kunststoffprofil statt, sobald die Stelle, an der das Kunststoffprofil ausgehärtet ist, sich in einem hinteren Bereich der Form befindet. Als hinterer Bereich der Form wird derjenige Bereich bezeichnet, der dem Ende, an dem das Kunststoffprofil aus der Form austritt, gegenüberliegt. Demgegenüber wird als vorderer Bereich derjenige bezeichnet, der am Ende des Austritts des fertigen Kunststoffprofils aus der Form liegt. Nachdem die Stelle, an der das Kunststoffprofil ausgehärtet ist, den hinteren Endbereich der Form erreicht hat, wird die Form entgegen der Herstellungsrichtung des Kunststoffprofils zurückbewegt, bis die Stelle, an der das Kunststoffprofil ausgehärtet ist, sich im vorderen Bereich der Form befindet. Die Form fährt so praktisch schrittweise auf dem fertiggestellten Kunststoffprofil zurück, und zwar in Richtung der noch nicht vom Kunststoff ummantelten bzw. eingebetteten Verstärkung.

Verfahrensmäßig ist bevorzugt vorgesehen, während des Zurückfahrens der Form auf dem dabei stillstehenden Kunststoffprofil die am hinteren Ende in die Form einlaufende Verstärkung mit plastifiziertem Kunststoff zu versehen und dabei die Verstärkung im Kunststoff einzubetten. Es findet auf diese Weise während der Zurückbewegung der Form gleichzeitig die Herstellung eines weiteren Abschnitts des Kunststoffprofils statt.

Durch das Hin- und Herbewegen der Form wandert die Stelle, an der das Kunststoffprofil ausgehärtet ist, innerhalb der Form vom hinteren Ende zum vorderen Ende. Während der anschließenden Stillstandsphase der Form härtet der sich noch in der Form befindliche Abschnitt des Kunststoffprofils zunehmend aus, wodurch die Stelle des ausgehärteten Kunststoffprofils wieder vom vorderen Ende zum hinteren Ende der Form wandert.

Nach einer weiteren Ausgestaltung des Verfahrens ist vorgesehen, das mindestens eine Haltemittel, das beim Zurückbewegen der Form das Kunststoffprofil relativ zu derselben festhält, in Phasen, in denen die Form nicht bewegt wird, außer Kontakt mit dem Kunststoffprofil zu bringen. Dadurch kann das jeweilige Haltemittel wieder in eine Ausgangsposition dicht vor die Form gelangen. Das oder jedes Haltemittel kann dabei sozusagen der Form nachrücken, nachdem diese auf dem Kunststoffprofil zurückbewegt worden ist und sich dabei vom jeweiligen Haltemittel, das während des Zurückbewegens der Form das Kunststoffprofil stillstehend hält, entfernt hat.

Eine weitere Ausgestaltung des Verfahrens sieht es vor, während der Relativbewegung der Form zum Kunststoffprofil die Verstärkung, insbesondere Stränge derselben, straff zu halten. Dadurch wird verhindert, dass die Verstärkung beim Zurückbewegen der Form nicht innerhalb des Kunststoffprofils sich verlagert bzw. wandert. Bevorzugt wird die Verstärkung gestrafft, wenn die Form relativ zum Kunststoffprofil zurückbewegt wird, wobei sich die Form der Abspuleinrichtung der Verstärkung nähert und dabei die Verstärkung durchhängen könnte.

Das Straffen der Verstärkung kann auf verschiedene Weisen erfolgen. Zum einen kann die Verstärkung, insbesondere wenn sie aus durchgehenden Strängen gebildet ist, gestrafft werden durch die Abspuleinrichtung, indem durch eine Abbremsung oder einen Antrieb derselben die Stränge oder eine sonstige Verstärkung einer Zugspannung ausgesetzt wird, die vorzugsweise so groß ist, dass sie der normalen Zugspannung der Stränge bei der Herstellung des Kunststoffprofils entspricht. Zum anderen kann die Spannung der Verstärkung noch hergestellt werden durch ein Klemmen des Kunststoffprofils am zur Abspuleinrichtung weisenden hinteren Ende der Form. Dann ist das Kunststoffprofil mit der Verstärkung an beiden Enden der Form gehalten, so dass innerhalb der Form, worauf es ankommt, die Spannung der Verstärkung, insbesondere der Stränge, konstant gehalten wird. Das führt insbesondere beim Vorwärtsbewegen der Form mit den Kunststoffprofilen zu einer Fixierung der Verstärkung in der Form, so dass bei dieser Bewegung die Verstärkung im Kunststoffprofil nicht wandern kann.

Eine Vorrichtung zur Lösung der eingangs genannten Aufgabe weist die Merkmale des Anspruchs 11 auf. Durch die Relativbewegbarkeit der Form zum Kunststoffprofil tritt aus dem vorderen Ende der Form ein Abschnitt des Kunststoffprofils aus, ohne dass dazu das Kunststoffprofil durch die Form gezogen werden muss. Vielmehr bewegt sich die Form auf dem Kunststoffprofil entlang, wobei ein Stück neu hergestellten Kunststoffprofils aus dem vorderen Ende der Form herauskommt. Es wird das Kunststoffprofil auf diese Weise semi-diskontinuierlich, nämlich quasi schrittweise Abschnitt für Abschnitt hergestellt.

In Herstellungsrichtung gesehen ist vor der Form mindestens ein Haltemittel angeordnet. Dieses hält den aus dem vorderen Ende der Form herausragenden Abschnitt des Kunststoffprofils, damit das Kunststoffprofil stehen bleibt und die Form relativ zu demselben bewegt werden kann, wodurch ein neu hergestellter Abschnitt des Kunststoffprofils sozusagen schrittweise entformt wird.

Gemäß einer Weiterbildung der Vorrichtung ist vorgesehen, das Haltemittel mit einem lösbaren Greif- bzw. Klemmmechanismus für das fertige Kunststoffprofil zu versehen. Der lösbare Greif- bzw. Klemmmechanismus kann das Kunststoffprofil festhalten, wenn die Form sich relativ zu demselben bewegen soll; durch das Lösen des Greif- bzw. Klemmmechanismus kann aber auch das jeweilige Haltemittel relativ zum Kunststoffprofil bewegt werden. Auf diese Weise ist auch ein schrittweises Zurückbewegen des Haltemittels gegenüber dem Kunststoffprofil möglich. Dadurch kann nach dem Zurückbewegen der Form entgegen der Herstellrichtung des Kunststoffprofils, wobei das oder jedes Haltemittel mit dem dieses haltenden Kunststoffprofil stehen bleibt, das jeweilige Haltemittel zurückbewegt werden vor die Form. Es können auf diese Weise sowohl die Haltemittel als auch die Form schrittweise Bewegungen ausführen, und zwar sowohl gemeinsam als auch unabhängig voneinander, also getrennt.

Eine weitere Ausbildung der Vorrichtung sieht vor, zumindest die Form, vorzugsweise auch das jeweilige oder alle Haltemittel, auf jeweils einem eigenen Schlitten anzuordnen. Auf diese Weise sind die Form und das oder die Haltemittel unabhängig voneinander schrittweise entlang des Kunststoffprofils hin- und herbewegbar. Die unterschiedlichen Schlitten für die Form und das oder alle Haltemittel sind in Herstellrichtung gesehen aufeinanderfolgend in der Nähe des Kunststoffprofils angeordnet, wobei der Schlitten für das jeweilige Haltemittel vor dem vorderen Ende der Form sich befindet. Außerdem sind unabhängige Steuerungen für die Schlitten der Form und des mindestens einen Haltemittels vorgesehen. Jedes Steuermittel ermöglicht eine individuelle Koordinierung der zum Teil gleichen, aber auch zum Teil unterschiedlichen Bewegungen der Form einerseits und des mindestens einen Haltemittels andererseits.

Gemäß einer alternativen Ausbildung der Vorrichtung ist vorgesehen, die Form und das mindestens eine Haltemittel zusammenhängend auszubilden. Das mindestens eine Haltemittel ist dadurch integraler Bestandteil der Form. Damit sich die Form und das mindestens eine Haltemittel relativ zum Kunststoffprofil verschieben können, ist vorgesehen, das mindestens eine Haltemittel beweglich mit der Form zu verbinden. Bevorzugt wird das realisiert durch einen elastischen Bereich zwischen der Form und dem dazu benachbarten Haltemittel. Dieser elastische Bereich hat zwei Funktionen. Er verbindet das Haltemittel mit der Form und er lässt eine Veränderung des Abstands des Haltemittels zur Form zu. Sind mehrere, beispielsweise zwei, Haltemittel vorgesehen, sind diese auch einen elastischen Bereich untereinander verbunden, der eine Veränderung des Abstands zwischen zwei aufeinanderfolgenden Haltemitteln - zulässt. Durch das Zusammenziehen und Längen der elastischen Bereiche lässt sich der Abstand zwischen den Haltemitteln und der Form und auch der Abstand zwischen den Haltemitteln untereinander verändern zum schrittweisen Verschieben der Form und/oder jedes Haltemittels gegenüber dem Kunststoffprofil.

Die elastischen Bereiche werden gedehnt und zusammengezogen durch Aktuatoren, die bevorzugt zwischen der Form und dem Haltemittel und/oder zwischen den Haltemitteln angeordnet sind. Bei den Aktuatoren kann es sich beispielsweise um Piezo-Stacks handeln. Diese verändern durch eine entsprechende elektrische Anregung ihre Abmessungen, wodurch unter Verformung der elastischen Bereiche die Abstände zwischen den Haltemitteln und der Form gezielt gesteuert veränderbar sind, und zwar bevorzugt periodisch.

Eine vorteilhafte Weiterbildung der Vorrichtung sieht es vor, die Form aus mehreren Formabschnitten zu bilden. Die einzelnen Formabschnitte sind durch elastische Zwischenabschnitte zu einer zusammenhängenden Form miteinander verbunden. Mit dieser Form können auch die Haltemittel durch elastische Bereiche verbunden sein. In den Bereichen der elastischen Zwischenabschnitte sind Aktuatoren angeordnet. Die sich somit zwischen den Zwischenabschnitten befndenden Aktuatoren dienen mindestens zum Verändern des Abstands der Zwischenabschnitte. Denkbar ist es aber auch, die Aktuatoren so auszubilden, dass sie die Richtung der Zwischenabschnitte verändern. Auf diese Weise kann der Verlauf der Form, insbesondere der Krümmungswinkel derselben, den Bedürfnissen entsprechend verändert werden, wodurch mit der gleichen Form unterschiedliche Verläufe aufweisende Kunststoffprofile herstellbar sind. Es lassen sich dadurch mit der gleichen Form nahezu beliebige Kunststoffprofile herstellen, indem durch die Aktuatoren im Zwischenraum zwischen benachbarten Formabschnitten die Stirnflächen benachbarter Formabschnitte gezielt antiparallel zueinander verlaufen.

Weitere Unteransprüchen betreffen bevorzugte Ausgestaltungen und Weiterbildungen sowohl des erfindungsgemäßen Verfahrens als auch der Vorrichtung.

Nachfolgend werden bevorzugte Ausführungsbeispiele der Erfindung anhand der Zeichnung näher erläutert. In dieser zeigen:
- Fig. 1: eine schematische Ansicht eines ersten Ausführungsbeispiels einer erfindungsgemäßen Vorrichtung in einer Ausgangsstellung,
- Fig. 2: die Vorrichtung der Fig. 1 nach einem ersten Arbeitsschritt, der auf die Ausgangsstellung folgt,
- Fig. 3: die Vorrichtung der Fig. 1 und 2 nach einem zweiten Arbeitsschritt,
- Fig. 4: die Vorrichtung der Fig. 1 bis 3 nach einem dritten Arbeitsschritt,
- Fig. 5: ein zweites Ausführungsbeispiel einer erfindungsgemäßen Vorrichtung in einer Ausgangsstellung,
- Fig. 6: die Vorrichtung der Fig. 5 nach einem ersten Arbeitsschritt,
- Fig. 7: die Vorrichtung nach der Fig. 5 und 6 nach einem zweiten Arbeitsschritt,
- Fig. 8: einen schematischen Längsschnitt durch die Vorrichtung der Fig. 5 bis 7,
- Fig. 9: eine schematische Seitenansicht einer Vorrichtung nach einem dritten Ausführungsbeispiel der Erfindung, und
- Fig. 10: einen Querschnitt X-X durch die Vorrichtung der Fig. 9.

Die Figuren zeigen schematisch eine erfindungsgemäße Vorrichtung, die auch zur Durchführung des erfindungsgemäßen Verfahrens dient. Bei dieser Vorrichtung handelt es sich um eine Pultrusionsvorrichtung für ein Kunststoffprofil 10 mit einer innenliegenden Verstärkung 11 und einen diese umgebenden Kunststoff 12, bei dem es sich vorzugsweise um ein Duroplast handelt. Im nur schematisch gezeigten Ausführungsbeispiel wird davon ausgegangen, dass die Verstärkung 11 aus drei endlosen Strängen 13 aus vorzugsweise hochzugfesten Fasern, beispielsweise Kohlefasern, besteht. Im Kunststoff 12 des Kunststoffprofils 10 können aber auch beliebige andere Verstärkungen eingebettet sein, beispielsweise aus Geweben und/oder Gewirken bzw. Kombination der Stränge 13 mit Geweben und/oder Gewirken. Auch ist die Erfindung auf die in den Figuren gezeigten drei Stränge 13 nicht beschränkt.

Mit der schematisch gezeigten Vorrichtung und dem erfindungsgemäßen Verfahren lassen sich durch Pultrusion einen beliebigen Verlauf aufweisende Kunststoffprofile 10 herstellen. In den Figuren ist exemplarisch ein gebogenes Kunststoffprofil 10 gezeigt, das einen kreisförmigen Verlauf erhält. Das gezeigte Kunststoffprofil 10 ist in einer Ebene gebogen. Es ist aber auch denkbar, mit der erfindungsgemäßen Vorrichtung und dem erfindungsgemäßen Verfahren Kunststoffprofile 10 herzustellen, die über einen räumlichen (dreidimensionalen) Verlauf verfügen.

Die gezeigte Vorrichtung weist eine Form 14 auf, die dem bogenförmigen Verlauf des herzustellenden Kunststoffprofils 10 entspricht. Eine Längsmittelachse der Form 14 ist demnach genauso gebogen wie das herzustellende Kunststoffprofil 10, wodurch der Radius des Kunststoffprofils 10 und der Längsmittelachse der Form 14 gleich sind. Die Form 14 weist eine Anpassung an den gekrümmten Verlauf des Kunststoffprofils 10 auf, die im gezeigten Ausführungsbeispiel der Gestalt eines Kreisringabschnitts ähnlich ist. Die Länge der Form 14 in Richtung des kreisbogenförmigen Kunststoffprofils 10 ist so bemessen, dass die in den Figuren schematisch als ein weißer Kreis dargestellte Stelle 17 der Aushärtung des Kunststoffprofils 10 in der Form 14 über eine gewisse Strecke in der Form 14 wandern kann. Diese Strecke entspricht einem Längenabschnitt des Kunststoffprofils 10 der in jedem weiter unten näher erläuterten Arbeitstakt der Vorrichtung nach dem erfindungsgemäßen Verfahren hergestellt werden kann.

Einem hinteren Ende 15 der Form 14, das ist das Ende, durch das die Stränge 13 zur Bildung der Verstärkung 11 im noch rohen, also vom Kunststoff 12 nicht umgebenen Zustand, in die Form 14 einlaufen, ist eine schematische in den Figuren dargestellte Abspuleinrichtung 16 zugeordnet. Diese nimmt einen gewissen Vorrat der Verstärkung 11 auf. Im gezeigten Ausführungsbeispiel, bei dem die Verstärkung 11 aus drei Strängen 13 gebildet ist, sind auf der Abspuleinrichtung 16 mindestens drei Spulen mit einem größeren Vorrat jeweils eines durchgehenden Strangs 13 angeordnet. Die Spulen können angetrieben und/oder abbremsbar sein, so dass sie die Stränge 13 stets mit einer vorgebbaren Spannung strammhalten.

Im Bereich des hinteren Endes 15, an dem die Stränge 13 in die Form 14 einlaufen, ist auch eine in den Figuren nicht gezeigte Einrichtung zum Zuführen flüssigen, insbesondere heißen Kunststoffs 12 vorgesehen. Ganz am Anfang der Form 14 wird dadurch flüssiger Kunststoff 12 zugeführt, um die Stränge 13 hiermit zu ummanteln. Mit der Zeit erstarrt der Kunststoff 12 in der Form 14 und härtet dabei aus. Die schematisch dargestellte Stelle 17, an der das Kunststoffprofil 10 ausgehärtet ist, wandert mit der Zeit immer mehr zum vorderen Ende 18 der Form 14. An diesem vorderen Ende 18 tritt später das ausgehärtete Kunststoffprofil 10 auch aus der Form aus.

In Herstellungsrichtung 19 gesehen ist mit geringem Abstand vor dem vorderen Ende 18 der Form 14 ein dem Kunststoffprofil 10 zugeordnetes Haltemittel 20 vorgesehen. Hierbei kann es sich im einfachsten Falle um einen Greifer zum lösbaren Ergreifen des Kunststoffprofils 10 handeln. Das Haltemittel 20 kann das fertige Kunststoffprofil 10 in einem sich vor der Form 14 befindlichen Bereich ergreifen und festhalten aber auch vom Kunststoffprofil 10 gelöst werden. Ebenso ist es denkbar, ein weiteres Haltemittel dem zu der Abspuleinrichtung 16 weisenden hinteren Ende 15 der Form zuzuordnen, wobei dieses Haltemittel vor dem hinteren Ende 15 angeordnet sein oder auch im hinteren Ende 15 der Form 14 integriert sein kann.

Sowohl der Form 14 als auch dem Haltemittel 20 ist jeweils ein eigener Schlitten zugeordnet. Diese Schlitten sind in den Figuren nicht gezeigt. Die Schlitten folgen in Herstellungsrichtung 19 aufeinander, wobei - in Herstellungsrichtung 19 gesehen - der Schlitten für das Haltemittel 20 sich vor dem Schlitten der Form 14 befindet. Die Schlitten sind so ausgebildet, dass daran sowohl die Form 14 als auch das Haltemittel 20 den bogenförmigen Verlauf des Kunststoffprofils 10 folgend verfahrbar sind. Die Schlitten sind mit unabhängigen Antrieben versehen und verfügen über Steuerungen, die ein unabhängiges Verfahren zulassen.

Bei komplexeren Verläufen des Kunststoffprofils 10, insbesondere bei räumlichen, dreidimensional gebogenen Kunststoffprofilen 10, sind die Bahnen der Schlitten und auch die Gestalt der Form 14 entsprechend angepasst. Denkbar ist es auch, sowohl die Form 14 als auch das Haltemittel 20 an eine entsprechende Anzahl Freiheitsgraden oder Achsen aufweisenden Roboterarmen anzuordnen, wodurch infolge entsprechend koordinierter Steuerungen die Roboter die Form 14 und auch das Haltemittel 20 auf beliebigen Bahnen entsprechend dem gewünschten Verlauf des Kunststoffprofils 10 bewegen und dadurch mit einer solchen Vorrichtung Kunststoffprofile 10 beliebiger Gestalt, auch dreidimensionaler Gestalt, herstellbar sind.

Nachfolgend wird das erfindungsgemäße Verfahren am Beispiel der Herstellung eines kreisbogenförmigen Kunststoffprofils 10 näher erläutert:

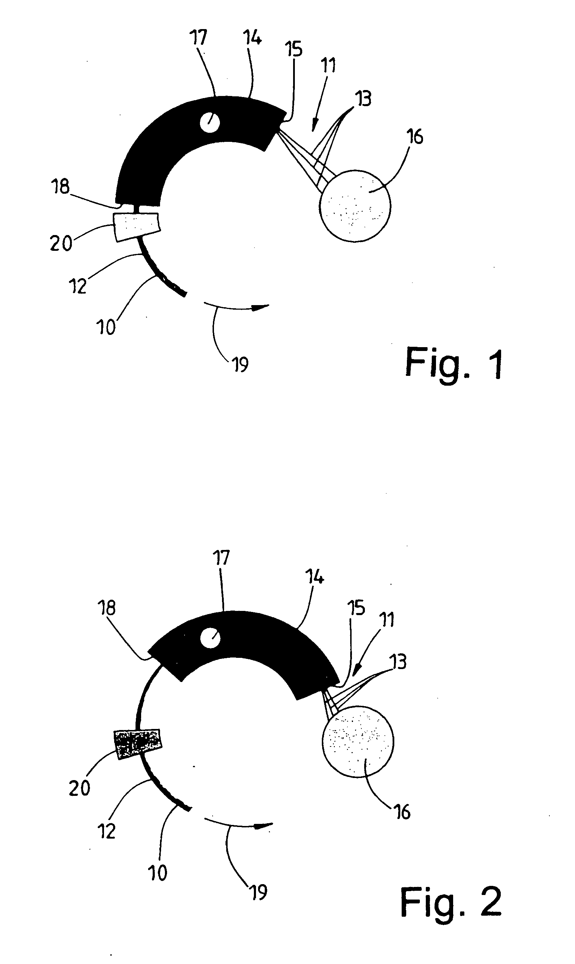

Die Fig. 1 zeigt die Ausgangsstellung der Vorrichtung. Hier befindet sich die Stelle 17, an der das Kunststoffprofil 10 in der Form 14 bereits ausgehärtet ist, in der Nähe des zur Abspuleinrichtung 16 weisenden hinteren Endes 15 der Form 14 oder anders ausgedrückt dichter am hinteren Ende 15 als am vorderen Ende 18 der Form 14. Das hintere Ende 15 der Form 14 ist dabei ausreichend weit von der Abspuleinrichtung 16 entfernt. Das Haltemittel 20 befindet sich mit geringem Abstand kurz vor dem vorderen Ende 18 der Form 14. Dabei kann das Haltemittel 20 bereits einen aus der Form 14 herausragenden fertigen Abschnitt des Kunststoffprofils 10 festklemmen und somit festhalten.

Von der Ausgangsstellung der Fig. 1 aus wird nun die Form 14 gegen die Herstellungsrichtung 19 zurückbewegt, wobei das Kunststoffprofil 10 vom Haltemittel 20 festgehalten wird, so dass eine Relativbewegung der Form 14 zum stillstehend gehaltenen Kunststoffprofil 10 zustande kommt, wobei sich die Form 14 auf dem Kunststoffprofil 10 zurückbewegt. Die Form 14 wird dabei am Schlitten entlang gefahren und von diesem geführt auf der kreisbogenförmigen Bahn des Kunststoffprofils 10. Hierbei führt die Form 14 eine Bewegung um den Mittelpunkt der kreisbogenförmigen Längsmittelachse des Kunststoffprofils 10 aus. Beim Zurückbewegen der Form 14 auf dem Kunststoffprofil 10 nähert sich das hintere Ende 15 der Form 14 der Abspuleinrichtung 16. Außerdem wandert die Stelle 17, an der das Kunststoffprofil 10 in der Form 14 ausgehärtet ist, in der Form 14 in Herstellungsrichtung 19 nach vorn in die Nähe des vorderen Endes 18, wobei die Stelle, an der das Kunststoffprofil 10 ausgehärtet ist, aber noch in der Form 14 verbleibt. Das das Kunststoffprofil 10 während des Zurückbewegens in der Form 14 fixierende Haltemittel 20 bleibt während des Zurückbewegens in der Form 14 in der Ausgangsstellung, wodurch es beim Zurückbewegen der Form 14 zur für die Erfindung wesentlichen Relativbewegung der Form 14 gegenüber dem stillstehenden Kunststoffprofil 10 kommt.

Die Fig. 2 zeigt, dass beim Zurückbewegen der Form 14 gegen die Herstellungsrichtung 19 sich das dabei stillstehende Haltemittel 20 vom vorderen Ende 18 der Form 14 entfernt, und zwar um die Länge des Kunststoffprofils 10, das beim Zurückbewegen der Form 14 durch das vordere Ende 18 derselben austritt.

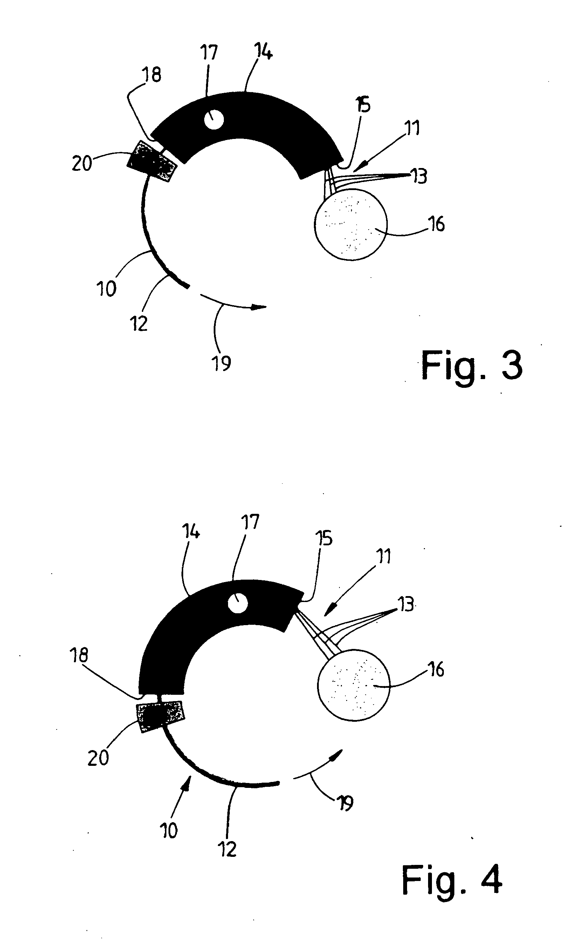

Aus der Fig. 3 ist erkennbar, dass das Haltemittel 20 anschließend wieder kurz vor das vordere Ende 18 der Form 14 zurückbewegt worden ist. Dieses geschieht derart, dass in der in der Fig. 2 dargestellten Stellung des Haltemittels 20 bei vollständig zurückgefahrener Form 14 das Haltemittel 20 vom Kunststoffprofil 10 abgekoppelt wird. Das Haltemittel 20 lässt dann das Kunststoffprofil 10 sozusagen los. Auf dem Schlitten zur Führung des Haltemittels 20 wird dieses nun ohne das Kunststoffprofil 10 zu halten zurückgefahren vor das vordere Ende 18 der Form 14, wie es die Fig. 3 zeigt.

Im weiteren Verfahrensschritt, der durch einen Vergleich der Fig. 3 und 4 deutlich wird, wird die an die Abspuleinrichtung 16 beim Zurückbewegen auf dem Kunststoffprofil 10 herangefahrene Form 14 wieder von der Abspuleinrichtung 16 wegbewegt, indem die Form 14 in die Ausgangsstellung gemäß der Fig. 1 gebracht wird. Hierbei wird so vorgegangen, dass die Form 14 und das Haltemittel 20 gemeinsam in Herstellungsrichtung 19 in die Ausgangsstellung zurückbewegt werden. Dabei wird vorzugsweise vom Haltemittel 20 der aus dem vorderen Ende 18 der Form 14 herausragende Bereich des Kunststoffprofils 10 wieder ergriffen. Es wird dann beim Vorwärtsbewegen der Form 14 und des Haltemittels 20 auch das Kunststoffprofil 10 mitbewegt, so dass bei dieser Vorwärtsbewegung keine Relativbewegung zwischen dem Kunststoffprofil 10 und der Form 14 sowie dem Haltemittel 20 stattfindet.

Nachdem die Form 14 gemäß der Fig. 2 auf dem Kunststoffprofil 10 entlang zurückbewegt worden ist, und dabei ein neu hergestellter Abschnitt des Kunststoffprofils 10 praktisch "entformt" worden ist, befindet sich die Stelle 17, an der das Kunststoffprofil 10 ausgehärtet ist, in der Nähe des vorderen Endes 18 der Form 14. Während der darauffolgenden Verfahrensschritte, die in den Fig. 3 und 4 gezeigt sind, also während der Rückkehr der Form 14 und des Haltemittels 20 in die Ausgangsstellung der Fig. 1, wandert die Stelle, an der das Kunststoffprofil 10 in der Form 14 ausgehärtet ist, wieder gegen die Herstellungsrichtung 19 zurück in Richtung des hinteren Endes 15 der Form. Dieses Zurückwandern der Stelle 17 der Aushärtung des Kunststoffprofils 10 in der Form 14 kann aber auch länger dauern als die Rückbewegung der Vorrichtung in die Ausgangsstellung der Fig. 1. In diesem Falle kommt es zu einer Taktpause, bevor aus der Ausgangsstellung der Form 14 und des Haltemittels 20 heraus wieder durch Zurückbewegen der Form 14 auf dem Kunststoffprofil 10 ein neu in der Form 14 hergestellter Abschnitt des Kunststoffprofils 10 entformt wird.

Während der zuvor beschriebenen Herstellung des Kunststoffprofils 10 kann es vorgesehen sein, dass zumindest beim Bewegen der Form 14 die Verstärkung 11 im Kunststoffprofil 10 strammgehalten wird. Das kann gesehen, indem die Abspuleinrichtung 16 durch einen Antrieb oder ein Abbremsen eine entsprechende Spannung insbesondere bei der Bewegung der Form 14, auf die Stränge 13 der Verstärkung 11 ausübt. Alternativ oder zusätzlich kann auch vorgesehen sein, die Stränge 13 der Verstärkung 11 nur in der Form 14 stramm zu halten. In diesem Falle ist dem hinteren Ende 15 der Form 14 ein weiteres Haltemittel zugeordnet. Dieses kann sich außerhalb der Form 14 vor dem hinteren Ende 15 befinden, aber auch in das hinter Ende 15 der Form 14 integriert sein.

Das erfindungsgemäße Verfahren ermöglicht eine diskontinuierliche, schrittweise Herstellung des Kunststoffprofils 10, wobei stets aufeinanderfolgende Teilstücke hergestellt werden, deren Länge von der Länge des Profilkanals zur Bildung des Kunststoffprofils in der Form 14 abhängig ist. Dadurch wird bestimmt, wie lang der Weg ist, den die Stelle 17, an der das Kunststoffprofil 10 in der Form 14 ausgehärtet ist, zwischen dem hinteren Ende 15 und dem vorderen Ende 18 der Form 14 zurücklegen kann. Je größer dieser Weg ist, um so länger ist das Teilstück des Kunststoffprofils 10, das in einem Arbeitstakt (Fig. 1 bis 4) diskontinuierlich, also schrittweise, hergestellt werden kann.

Sollte es erforderlich sein, das Kunststoffprofil 10 durch einen zusätzlichen Pressvorgang in der Form 14 zu verdichten, auszuhärten und/oder zu kalibrieren, kann dieses beim in den Fig.1 bis 4 gezeigten Verfahren der Form 14 mit dem Haltemittel 20 in Herstellungsrichtung 19 geschehen.

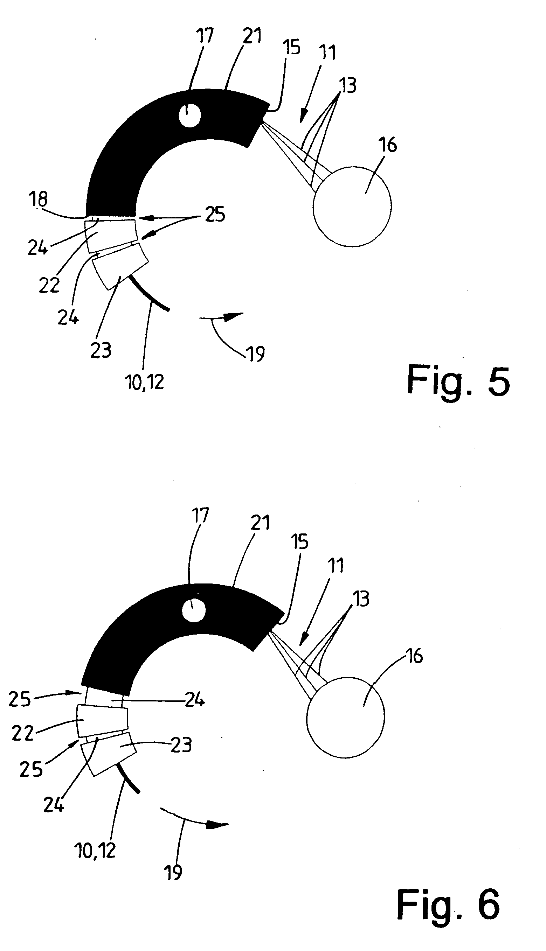

Die Fig. 5 bis 8 zeigen ein zweites Ausführungsbeispiel der erfindungsgemäßen Vorrichtung. Bei dieser Vorrichtung ist eine Form 21 mit zwei Haltemitteln 22 und 23 verbunden. Soweit die Vorrichtung mit derjenigen der Fig. 1 bis 4 übereinstimmt, sind für gleiche Teile und Gegenstände gleiche Bezugsziffern verwendet.

Die Haltemittel 22 und 23 sind integraler Bestandteil der Form 21. Die Haltemittel 22 und 23 sind vor dem vorderen Ende 18 der Form 21 angeordnet. Das auf dem vorderen Ende 18 der Form 21 folgende Haltemittel 22 ist durch einen im Querschnitt verringerten elastischen Bereich 24 mit der Form 21 einstückig verbunden. Mit einer gleichermaßen ausgebildeten elastischen Bereich 24 sind die benachbarten Haltemittel 22 und 23 untereinander verbunden. Die elastischen Bereiche 24 weisen einen deutlich geringeren Außendurchmesser auf als die Form 21 und die über gleiche Außendurchmesser verfügenden Haltemittel 22 und 23. Dadurch entstehen umlaufende, ringförmige Zwischenräume 25 zwischen dem vorderen Ende 18 der Form 21 und der dieser zugewandten Stirnseite des Haltemittels 22 sowie zwischen benachbarten Stirnseiten der Haltemittel 22 und 23. Durch ein Strecken bzw. Stauchen der elastischen Bereiche 24 können in den Bereichen der Zwischenräume 25 die Abstände zwischen den Haltemitteln 22 und 23 und zwischen dem Haltemittel 22 und der Form 21 verändert werden. Diese Veränderung der Abstände erfolgt durch Aktuatoren 26, bei denen es sich im gezeigten Ausführungsbeispiel um Piezo-Stacks handelt, die elektrisch in ihrer Breite veränderbar sind. Die Aktuatoren 26 sind mit benachbarten Stirnseiten der nebeneinander angeordneten Haltemittel 22 und 23 einerseits und dem vorderen Ende 18 der Form 21 und der dieser zugewandten Stirnseite des Haltemittels 22 andererseits verbunden.

Die Haltemittel 22 und 23 weisen im Inneren das Kunststoffprofil 10 umgebende Klemmmechanismen 27 auf. Diese können beliebig ausgestaltet sein. Im gezeigten Ausführungsbeispiel ist vorgesehen, dass auch die Klemmmechanismen 27 piezo-elektrisch arbeiten, indem sie je nach anliegender Spannung sich im Durchmesser vergrößern oder verringern und dadurch die Haltemittel 22, 23 am Außenumfang des Kunststoffprofils 10 festklemmen oder vom Kunststoffprofil 10 lösen.

Nachfolgend wird die Herstellung des Kunststoffprofils mit der Vorrichtung der Fig. 5 bis 8 näher erläutert:

Die Fig. 5 zeigt die Ausgangsstellung der Vorrichtung. Hier befindet sich die Stelle 17, an der das Kunststoffprofil 10 in der Form 21 bereits ausgehärtet ist, in der Nähe des zur Abspuleinrichtung 16 weisenden hinteren Endes 15 der Form 21. Die Haltemittel 22 und 23 sind weitestgehend zusammengefahren und auch an das vordere Ende 18 der Form 21 herangefahren.

Von der Ausgangsstellung der Fig. 5 aus wird nun die Form 21 gegen die Herstellungsrichtung 19 zurückbewegt, wobei das Kunststoffprofil 10 mindestens vom Haltemittel 23 festgehalten wird, so dass eine Relativbewegung der Form 21 zum stillstehend gehaltenen Kunststoffprofil 10 zustande kommt, wobei sich die Form 21 auf dem Kunststoffprofil 10 zurückbewegt. Hervorgerufen wird diese Zurückbewegung der Form 21 dadurch, dass der Aktuator 26 den elastischen Bereich 24 zwischen dem Haltemittel 22 und der Form 21 dehnt und damit verlängert. Infolge des Festklammern mindestens eines Haltemittels 23 und/oder 22 auf dem Kunststoffprofil 10 erfolgt keine Ortsveränderung der Haltemittel 22 und 23. Bei diesem Zurückbewegen der Form 21 auf dem Kunststoffprofil 10 nähert sich das hintere Ende 15 der Form 21 der Abspuleinrichtung 16. Außerdem wandert die Stelle 17, an der das Kunststoffprofil 10 in der Form 21 ausgehärtet ist, in der Form 21 in Herstellungsrichtung 19 nach vorn in die Nähe des vorderen Endes 18.

Die Fig. 6 zeigt, dass beim Zurückbewegen der Form 21 gegen die Herstellungsrichtung 19 sich die dabei stillstehenden Haltemittel 22 und 23 vom vorderen Ende 18 der Form 21 entfernen, und zwar um die Länge des Kunststoffprofils 10, das beim Zurückbewegen der Form 21 durch das vordere Ende 18 austritt.

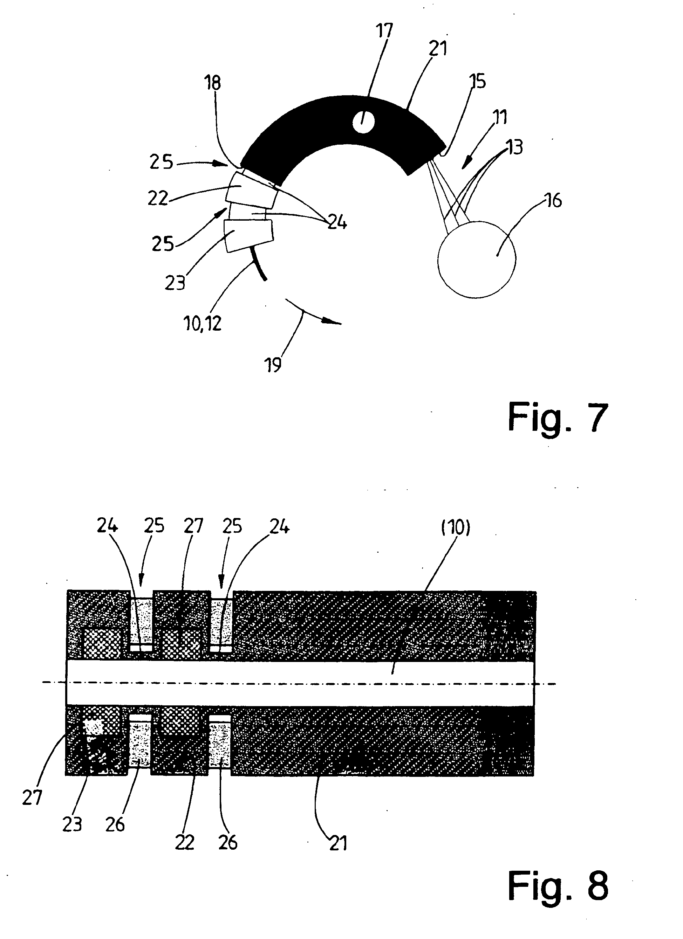

Die Fig. 7 zeigt den nächsten Verfahrensschritt, bei dem das der Form 21 zugewandte Haltemittel 22 wieder so weit wie möglich an das vordere Ende 18 der Form 21 herangefahren ist, so dass sich das Haltemittel 22 wieder in der in der Fig. 5 gezeigten Ausgangsstellung befindet. Dazu ist die Klemmung des Haltemittels 22 auf dem Kunststoffprofil 10 gelöst worden, also der Klemmmechanismus 27 geöffnet. Hingegen ist das Haltemittel 23 mit dem diesen zugeordneten Klemmmechanismus 27 noch am Kunststoffprofil 10 festgeklemmt, so dass sich nur die Position des Haltemittels 22 ändert, nicht aber die des Haltemittels 23.

Nachdem gemäß der Fig. 7 das Haltemittel 22 an die Form 21 herangefahren ist, werden die Form 21 und das Haltemittel 22 gemeinsam in Herstellungsrichtung 19 vorbewegt bis an das Haltemittel 23. Dabei wird die Form 21 von der Abspuleinrichtung 16 wegbewegt und es wandert die Stelle 17 der Aushärtung des Kunststoffprofils 10 wieder gegen die Herstellungsrichtung 19 zurück in Richtung des hinteren Endes 15 der Form 21. Gleichzeitig wird hierbei ein neu hergestellter Abschnitt des Kunststoffprofils 10 "entformt", indem dieser Abschnitt beim Vorbewegen der Form 21 und des Haltemittels 22 in Herstellungsrichtung 19 aus dem Haltemittel 22 herausgeschoben wird. Hierbei ist der Klemmmechanismus 27 des Haltemittels 23 geöffnet, während der Klemmmechanismus 27 des Haltemittels 22 geschlossen ist. Nach dem "Entformen" eines neu hergestellten Abschnitts des Kunststoffprofils 10 durch das Vorbewegen der Form 21 und des Haltemittels 22 bis dicht an das Haltemittel 23 ist die Vorrichtung wieder in die Ausgangsstellung der Fig. 5 gelangt, so dass nach der zuvor beschriebenen Vorgehensweise ein neuer Abschnitt des Kunststoffprofils 10 hergestellt werden kann.

Bei allen in den Fig. 5 bis 7 gezeigten Arbeitsschritten ändert das vordere Haltemittel 23 seine Position nicht. Das Haltemittel 23 bleibt also stets ortsfest. Nur das Haltemittel 22 und die Form 21 verändern periodisch ihre Position und damit den Abstand untereinander und/oder gemeinsam relativ zum Haltemittel 23.

Gemäß einer Weiterbildung des Verfahrens ist es denkbar, eine Form zu verwenden, die in der Krümmung veränderlich ist, vorzugsweise kontinuierlich verändert werden kann. Es braucht nicht die ganze Form in der Krümmung veränderlich zu sein, es reicht, wenn der die Kontur des Querschnitts des Kunststoffprofils 10 bildende Profilkanal der Form in der Gestalt bzw. im Verlauf, insbesondere der Krümmung, veränderlich ist.

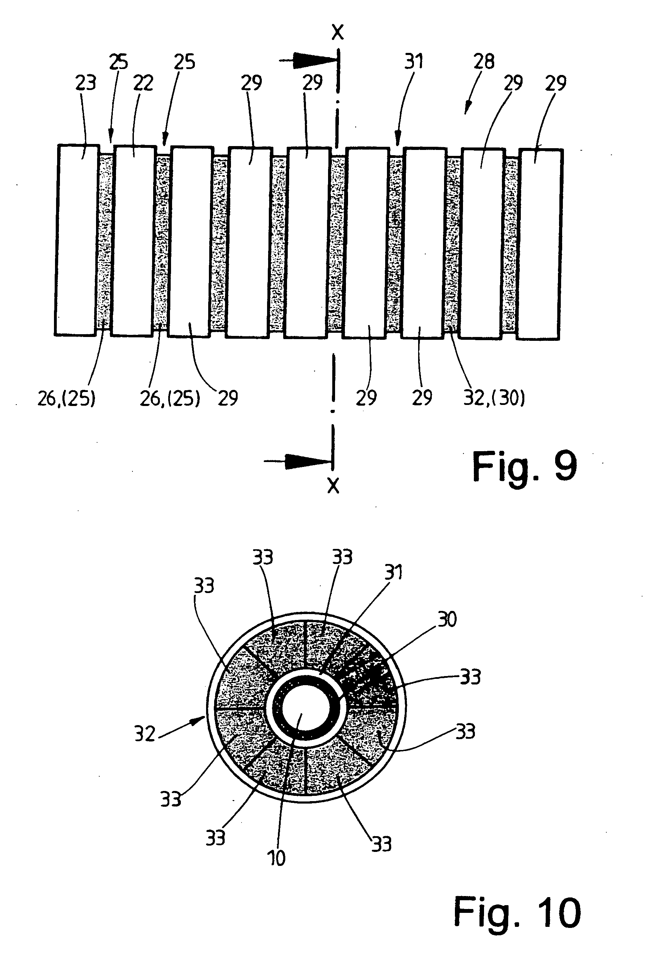

Die Fig. 9 und 10 zeigen eine Weiterbildung der Vorrichtung gemäß den Fig. 5 bis 8. Diese Vorrichtung unterscheidet sich von der zuvor beschriebenen Vorrichtung durch die Form 28. Für gleiche Bezugsziffern der Vorrichtung der Fig. 5 bis 8 werden gleiche Bezugsziffern verwenden.

Die Form 28 ist so ausgebildet, dass sie in der Krümmung beliebig veränderbar ist. Zu diesem Zweck ist die Form 28 aus mehreren hintereinander liegenden kurzen Formabschnitte 29 gebildet. Diese sind vorzugsweise gleich ausgebildet. Zwischen den benachbarten Formabschnitten 29 sind elastische Abschnitte 30 angeordnet. Die elastischen Abschnitte 30 verbinden die Formabschnitte 29 zur insgesamt einteiligen Form 28. Den Zwischenräumen 31 zwischen den Formabschnitten 29 sind die elastischen Abschnitte umgebende Aktuatoren 32 vorgesehen. Diese können genauso wie die Aktuatoren 26 nach dem piezo-elektrischen Prinzip die elastischen Abschnitte 30 zwischen benachbarten Formabschnitten 29 längen und kürzen. Auf das vordere Ende 18 der Form 28 folgen auch hier Haltemittel 22 und 23. Die Formabschnitte 29 sind bei der gezeigten Form 28 genauso lang wie die Haltemittel 22 und 23 ausgebildet. Diese sind so ausgebildet, wie in der Fig. 8 gezeigt. Im Gegensatz zu den Haltemitteln 22 und 23 verfügen die Formabschnitte 29 über keine Klemmmechanismen 27.

Die Fig. 10 zeigt die Ausbildung der Aktuatoren 32 zur gezielten Veränderung der Krümmung der Form 28. Demzufolge ist jeder Aktuator 32 aus mehreren Aktuatorsegmenten 33 mit der Gestalt von Kreisringsegmenten gebildet. Im gezeigten Ausführungsbeispiel sind acht gleiche Aktuatursegmente 33 vorgesehen, obwohl die Zahl der Aktuatorsegmente 33 auch größer oder kleiner sein kann. Durch unterschiedliches Ansteuern der Aktuatorsegmente 33 ist es möglich, dass sich diese auf einer Seite stärker ausdehnen als auf der anderen Seite und dadurch die Formabschnitte 29 gegeneinander verkippt werden, so dass die Zwischenräume 31 unterschiedlich breit werden. Durch die Aufteilung des Aktuators 32 auf Aktuatorsegmente 33 ist es möglich, die Krümmung der Form 28 in jede beliebige Richtung zu verändern, insbesondere auch die Form in dreidimensionale Verläufe zu lenken.

Es ist auch eine alternative Ausgestaltung der Vorrichtung denkbar, bei der das Kunststoffprofil 10 durch die Form bewegt wird durch Dickenschwingungen entlang der Form. Diese Ausgestaltung eignet sich besonders für ein Kunststoffprofil 10 mit einem wenig schrumpfenden Kunststoff. Das Vorwärtsbewegen des Kunststoffprofils 10 mittels Dickenschwingungen durch die Form kann mit der Form 28 aus einzelnen Formabschnitten 29 realisiert werden, wobei die Dickenschwingungen durch periodische Bewegungen der Formabschnitte 29 mittels der Aktuatoren 32 zustande kommen, indem sich die Formabschnitte 29 nach und nach bzw. abwechselnd auf dem Kunststoffprofil 10 in Herstellungsrichtung 19 vor- oder zurückbewegen. Bei einem solchermaßen durch Dickenschwingungen der Form 28 hervorgerufenen Transport des Kunststoffprofils 10 durch die Form 28 kann auf Haltemittel 22 und 23 verzichtet werden.

Die Dickenschwingungen der Formen 28 werden durch akustische Schwingungen realisiert, die das Kunststoffprofil 10 bereichsweise in der Form 28 klemmen, und zwar so, dass einige Formabschnitte 29 auf dem Kunststoffprofil frei längsbeweglich sind und andere Formabschnitte 29 infolge der Dickenschwingungen festgehalten werden.

### Bezugszeichenliste

- 10: Kunststoffprofil
- 11: Verstärkung
- 12: Kunststoff
- 13: Strang
- 14: Form
- 15: hinteres Ende
- 16: Abspuleinrichtung
- 17: Stelle
- 18: vorderes Ende
- 19: Herstellungsrichtung
- 20: Haltemittel
- 21: Form
- 22: Haltemittel
- 23: Haltemittel
- 24: elastischer Bereich
- 25: Zwischenraum
- 26: Aktuator
- 27: Klemmmechanismus
- 28: Form
- 29: Formabschnitt
- 30: elastischer Abschnitt
- 31: Zwischenraum
- 32: Aktuator
- 33: Aktuatorsegment

## Patentansprüche

1. Verfahren zum Herstellen eines vorzugsweise gekrümmten Kunststoffprofils (10), wobei eine durchgehende Verstärkung (11) aus Strängen (13), Geweben und/oder dergleichen durch eine Form (14; 21; 28) geführt und in der Form (14; 21; 28) im Kunststoff (12) eingebettet wird, **dadurch gekennzeichnet, dass** die Form (14; 21; 28) periodisch relativ zum stillstehenden Kunststoffprofil (10) bewegt wird.

2. Verfahren nach Anspruch 1, **dadurch gekennzeichnet, dass** die Form (14; 21; 28) entlang des Verlaufs des Kunststoffprofils (10) auf demselben bewegt wird, insbesondere das Kunststoffprofil (10) während der Bewegung der Form (14; 21; 28) festgehalten wird.

3. Verfahren nach Anspruch 1 oder 2, **dadurch gekennzeichnet, dass** die Form (14; 21; 28) diskontinuierlich bzw. schrittweise hin- und herbewegt wird, wobei vorzugsweise nur während einer Rückwärtsbewegung der Form (14; 21; 28) gegen die Herstellungsrichtung (19) eine Relativbewegung der Form (14; 21; 28) zum Kunststoffprofil (10) stattfindet.

4. Verfahren nach einem der vorhergehenden Ansprüche, **dadurch gekennzeichnet, dass** die Form (14; 21; 28) zum Entformen bzw. Ausstoßen eines neu hergestellten Abschnitts des Kunststoffprofils (10) gegen die Herstellungsrichtung (19) auf dem dabei stillstehend gehaltenen Kunststoffprofil (10) eine bestimmte Strecke zurückbewegt wird, wodurch nach und nach bei jedem Arbeitstakt ein Stück des Kunststoffprofils (10) aus der Form (14; 21; 28) heraustritt.

5. Verfahren nach einem der vorhergehenden Ansprüche, **dadurch gekennzeichnet, dass** während der schrittweisen Bewegung der Form (14; 21; 28) gegen die Herstellungsrichtung (19) eine Stelle (17), an der das Kunststoffprofil (10) in der Form (14; 21; 28) ausgehärtet ist, zwischen gegenüberliegenden Endbereichen der Form (14; 21; 28) wandert, vorzugsweise die Form (14; 21; 28) relativ zum Kunststoffprofil (10) bewegt wird, wenn die Stelle (17), an der das Kunststoffprofil (10) ausgehärtet ist, sich im Bereich eines hinteren Endes (15) der Form (14; 21; 28) befindet.

6. Verfahren nach einem der vorhergehenden Ansprüche, **dadurch gekennzeichnet, dass** die Form (14; 21; 28) relativ zum stillstehenden Kunststoffprofil (10) zurückbewegt wird, vorzugsweise auf dem Kunststoffprofil (10) entlangbewegt wird, bis die Stelle (17), an der das Kunststoffprofil (10) in der Form (14; 21; 28) ausgehärtet ist, sich im Bereich des vorderen Endes (18) der Form (14; 21; 28) befindet, wobei insbesondere mindestens beim Zurückbewegen der Form (14; 21; 28) entgegen der Herstellungsrichtung (19) des Kunststoffprofils (10) der Form (14; 21; 28) fließfähiger, insbesondere flüssiger, Kunststoff zugeführt wird.

7. Verfahren nach einem der vorhergehenden Ansprüche, **dadurch gekennzeichnet, dass** das Kunststoffprofil (10) während des Entlangbewegens der Form (14; 21; 28) auf dem relativ zu derselben stillstehenden Kunststoffprofil (10) von mindestens einem Haltemittel (20) festgehalten wird.

8. Verfahren nach Anspruch 7, **dadurch gekennzeichnet, dass** das mindestens eine Haltemittel (20; 22, 23) in Phasen, in denen die Form (14; 21; 28) stillsteht, außer Kontakt mit dem Kunststoffprofil (10) gebracht wird und relativ zum stillstehenden Kunststoffprofil (10) in Richtung zur ebenfalls stillstehenden Form (14; 21; 28) bewegt wird, vorzugsweise entgegen der Herstellungsrichtung (19) zurückbewegt wird, und gegebenenfalls im Anschluss an die Zurückbewegung der Form (14; 21; 28) mindestens ein sich außer Kontakt mit dem Kunststoffprofil (10) befindliche Haltemittel (20; 22, 23) in die Nähe des vorderen Endes (18) der Form (14; 21; 28) bewegt wird, vorzugsweise relativ zum dabei stillstehenden Kunststoffprofil (10).

9. Verfahren nach Anspruch 7 und 8, **dadurch gekennzeichnet, dass** zum Erreichen einer Ausgangsstellung die Form (14; 21; 28), das oder jedes Haltemittel (20; 22, 23) und das Kunststoffprofil (10) in Herstellungsrichtung (19) bewegt werden.

10. Verfahren nach einem der vorhergehenden Ansprüche, **dadurch gekennzeichnet, dass** beim Bewegen der Form (14; 21; 28) die Verstärkung (11) strammgehalten wird, insbesondere innerhalb der Form (14; 21; 28).

11. Vorrichtung zur Herstellung eines vorzugsweise gekrümmten Kunststoffprofils (10) mit einer Form (14; 21; 28), in der eine durchgehende Verstärkung (11) des Kunststoffprofils (10) in flüssigem Kunststoff (12) einbettbar ist, **dadurch gekennzeichnet, dass** die Form (14; 21; 28) relativ zum Kunststoffprofil (10) auf demselben entlangbewegbar ist.

12. Vorrichtung nach Anspruch 11, **dadurch gekennzeichnet, dass** in Herstellungsrichtung (19) gesehen vor der Form (14; 21; 28) mindestens ein Haltemittel (20; 22, 23) für das aus der Form (14; 21; 28) ausgetretene fertige Kunststoffprofil (10) angeordnet ist, wobei vorzugsweise das jeweilige Haltemittel (20; 22, 23) zur Herstellung einer lösbaren Greifverbindung mit dem fertigen Kunststoffprofil (10) außerhalb der Form (14; 21; 28), insbesondere vor der Form (14; 21; 28), ausgebildet ist und/oder das oder jedes Haltemittel (20; 22, 23) relativ zum Kunststoffprofil (10) bewegbar ist.

13. Vorrichtung nach Anspruch 11 oder 12, **dadurch gekennzeichnet, dass** die Form (21; 28) und das mindestens eine Haltemittel (22, 23) beweglich miteinander verbunden sind, vorzugsweise derart, dass zwischen der Form (21; 28) und dem Haltemittel (22, 23) und gegebenenfalls zwischen benachbarten Haltemitteln (22, 23) ein in Längsrichtung des Kunststoffprofils (10) abwechselnd dehnbarer und zusammenziehbarer elastischer Bereich (24) angeordnet ist.

14. Vorrichtung nach Anspruch 13, **dadurch gekennzeichnet, dass** die Haltemittel (22, 23) untereinander und die Form (21; 28) mit einem benachbarten Haltemittel (22) durch die elastischen Bereiche (24) verbunden sind, wobei den elastischen Bereichen (24) Aktuatoren (26) zum gezielten Längen und Zusammenziehen der elastischen Bereiche (24) zugeordnet sind.

15. Vorrichtung nach einem der Ansprüche 11 bis 14, **dadurch gekennzeichnet, dass** die Form (28) aus mehreren durch elastische Abschnitte (30) verbundene Formabschnitte (29) gebildet ist, wobei den Abschnitten (30) Aktuatoren (32) zum Verändern des Abstands und/oder der Richtung der Formabschnitte (29) zueinander ausgebildet sind.

16. Vorrichtung nach Anspruch 15, **dadurch gekennzeichnet, dass** die Aktuatoren (32) aus mehreren vorzugsweise gleichen Aktuatorsegmenten (33) zusammengesetzt sind.

## Claims

1. A process for producing a preferably curved plastic profile (10), a continuous reinforcement (11) comprising strands (13), woven fabrics and/or the like being led through a die (14; 21; 28) and embedded in the plastic (12) in the die (14; 21; 28), **characterized in that** the die (14; 21; 28) is periodically moved in relation to the stationary plastic profile (10).

2. The process as claimed in claim 1, **characterized in that** the die (14; 21; 28) is moved along the shape of the plastic profile (10) on the same, in particular the plastic profile (10) is securely held during the movement of the die (14; 21; 28).

3. The process as claimed in claim 1 or 2, **characterized in that** die (14; 21; 28) is moved back and forth discontinuously or step by step, a relative movement of the die (14; 21; 28) in relation to the plastic profile (10) preferably only taking place during a backward movement of the die (14; 21; 28) counter to the direction of production (19).

4. The process as claimed in one of the preceding claims, **characterized in that**, for the purpose of removing or ejecting a newly produced portion of the plastic profile (10) from the die, the die (14; 21; 28) is moved back a certain distance counter to the direction of production (19) on the plastic profile (10) that is kept stationary as it does so, whereby a piece of the plastic profile (10) emerges from the die (14; 21; 28) progressively with each working cycle.

5. The process as claimed in one of the preceding claims, **characterized in that**, during the step-by-step movement of the die (14; 21; 28) counter to the direction of production (19), a location (17) at which the plastic profile (10) has cured in the die (14; 21; 28) migrates between opposite end regions of the die (14; 21; 28), preferably the die (14; 21; 28) is moved in relation to the plastic profile (10) when the location (17) at which the plastic profile (10) has cured is located in the region of a rear end (15) of the die (14; 21; 28).

6. The process as claimed in one of the preceding claims, **characterized in that** the die (14; 21; 28) is moved back in relation to the stationary plastic profile (10), preferably is moved along on the plastic profile (10), until the location (17) at which the plastic profile (10) has cured in the die (14; 21; 28) is located in the region of the front end (18) of the die (14; 21; 28), flowable, in particular liquid, plastic being fed to the die (14; 21; 28) in particular at least during the moving back of the die (14; 21; 28) counter to the direction of production (19) of the plastic profile (10).

7. The process as claimed in one of the preceding claims, **characterized in that**, during the moving along of the die (14; 21; 28) on the plastic profile (10) that is stationary in relation to the same, the plastic profile (10) is securely held by at least one holding means (20).

8. The process as claimed in claim 7, **characterized in that**, in phases in which the die (14: 21; 28) is stationary, the at least one holding means (20; 22, 23) is brought out of contact with the plastic profile (10) and moved in relation to the stationary plastic profile (10) in the direction of the likewise stationary die (14; 21; 28), preferably is moved back counter to the direction of production (19), and, if appropriate, following the movement back of the die (14; 21; 28), at least one holding means (20; 22, 23) that is not in contact with the plastic profile (10) is moved into the vicinity of the front end (18) of the die (14; 21; 28), preferably in relation to the plastic profile (10) that is stationary as it does so.

9. The process as claimed in claims 7 and 8, **characterized in that**, to reach a starting position, the die (14; 21; 28), the or each holding means (20; 22, 23) and the plastic profile (10) are moved in the direction of production (19).

10. The process as claimed in one of the preceding claims, **characterized in that**, during the moving of the die (14; 21; 28), the reinforcement (11) is kept taut, in particular within the die (14; 21; 28).

11. An apparatus for producing a preferably curved plastic profile (10), comprising a die (14; 21; 28), in which a continuous reinforcement (11) of the plastic profile (10) can be embedded in liquid plastic (12), **characterized in that** the die (14; 21; 28) can be moved along in relation to the plastic profile (10) on the same.

12. The apparatus as claimed in claim 11, **characterized in that**, seen in the direction of production (19), at least one holding means (20; 22, 23) for the finished plastic profile (10) emerging from the die (14; 21; 28) is arranged in front of the die (14; 21; 28), the respective holding means (20; 22, 23) preferably being formed for establishing a releasable gripping connection with the finished plastic profile (10) outside the die (14; 21; 28), in particular in front of the die (14; 21; 28), and/or the or each holding means (20; 22, 23) being movable in relation to the plastic profile (10).

13. The apparatus as claimed in claim 11 or 12, **characterized in that** the die (21: 28) and the at least one holding means (22, 23) are movably connected to one another, preferably in such a way that an elastic region (24) that can be alternatingly stretched and drawn together in the longitudinal direction of the plastic profile (10) is arranged between the die (21; 28) and the holding means (22, 23) and, if appropriate, between adjacent holding means (22, 23).

14. The apparatus as claimed in claim 13, **characterized in that** the holding means (22, 23) are connected to one another and the die (21; 28) is connected to an adjacent holding means (22) by the elastic regions (24), the elastic regions (24) being assigned actuators (32) for the deliberate stretching out and drawing together of the elastic regions (24).

15. The apparatus as claimed in one of claims 11 to 14, **characterized in that** the die (28) is formed by a number of die portions (29) connected by elastic portions (30), the portions (30) actuators (32) being formed for changing the distance and/or the direction of the die portions (29) in relation to one another.

16. The apparatus as claimed in claim 15, **characterized in that** the actuators (32) are made up of a number of, preferably identical, actuator segments (33).

## Revendications

1. Procédé de fabrication d'un profilé en plastique de préférence courbé (10), dans lequel on guide un renfort continu (11) composé de cordons (13), de tissus et/ou analogues à travers un moule (14; 21; 28) et on le noie dans le plastique (12) dans le moule (14; 21; 28), **caractérisé en ce que** l'on déplace le moule (14; 21; 28) périodiquement par rapport au profilé en plastique immobile (10).

2. Procédé selon à revendication 1, **caractérisé en ce que** l'on déplace le moule (14; 21; 28) le long du tracé du profilé en plastique (10) sur celui-ci, en particulier on immobilise le profilé en plastique (10) pendant le mouvement du moule (14; 21; 28).

3. Procédé selon la revendication 1 ou 2, **caractérisé en ce que** l'on déplace le moule (14; 21; 28) en mouvement réciproque de manière discontinue ou progressive, dans lequel un mouvement relatif du moule (14; 21; 28) par rapport au profilé en plastique (10) ne se produit de préférence que pendant un mouvement de retour du moule (14; 21; 28) à l'opposé de la direction de fabrication (29).

4. Procédé selon l'une quelconque des revendications précédentes, **caractérisé en ce que** l'on ramène le moule (14; 21; 28) en arrière sur une distance déterminée, à l'opposé de la direction de fabrication (19) et sur le profilé en plastique (10) maintenu immobile, pour démouler ou éjecter une section nouvellement fabriquée du profilé en plastique (10) un morceau du profilé en plastique (10) sortant ainsi peu à peu hors du moule (14; 21; 28) à chaque cycle de travail.

5. Procédé selon l'une quelconque des revendications précédentes, **caractérisé en ce que**, pendant le mouvement progressif du moule (14; 21; 28) à l'opposé de la direction de fabrication (19), une endroit (17), où le profilé en plastique (10) est durci dans le moule (14; 21; 28), migre entre des zones d'extrémité opposées du moule (14; 21; 28), de préférence on déplace le moule (14; 21; 28) par rapport au profilé en plastique (10) lorsque l'endroit (17), où le profilé en plastique (10) est durci, se trouve dans la région d'une extrémité arrière (15) du moule (14; 21; 28).

6. Procédé selon l'une quelconque des revendications précédentes, **caractérisé en ce que** l'on ramène le moule (14; 21; 28) en arrière par rapport au profilé en plastique immobile (10), de préférence on le déplace le long du profilé en plastique (10) jusqu'à ce que l'endroit (17), où le profilé en plastique (10) est durci dans le moule (14; 21; 28), se trouve dans la région de l'extrémité avant (18) du moule (14; 21; 28), dans lequel on alimente le moule (14; 21; 28) en plastique coulant, en particulier liquide, en particulier au moins pendant le mouvement de retour du moule (14; 21; 28) à l'opposé de la direction de fabrication (19) du profilé en plastique (10).

7. Procédé selon l'une quelconque des revendications précédentes, **caractérisé en ce que** l'on immobilise le profilé en plastique (10) pendant le mouvement du moule (14; 21; 28) le long du profilé en plastique (10) immobile par rapport à celui-ci, au moyen d'au moins un moyen de maintien (20).

8. Procédé selon la revendication 7, **caractérisé en ce que** l'on amène ledit au moins un moyen de maintien (20; 22, 23), dans des phases dans lesquelles le moule (14; 21; 28) est immobile, hors de contact avec le profilé en plastique (10) et on le déplace par rapport au profilé en plastique immobile (10) en direction du moule (14; 21; 28) également immobile, on le déplace en arrière de préférence à l'opposé de la direction de fabrication (19) et, éventuellement à la suite du mouvement de retour du moule (14; 21; 28), on déplace au moins un moyen de maintien (20; 22, 23) se trouvant hors de contact avec le profilé en plastique (10) au voisinage de l'extrémité avant (18) du moule (14; 21; 28), de préférence par rapport au profilé en plastique alors immobile (10).

9. Procédé selon la revendication 7 et 8, **caractérisé en ce que**, pour atteindre une position de sortie, on déplace le moule (14; 21; 29), le ou les moyens de maintien (20; 22, 23) et le profilé en plastique (10) dans la direction de fabrication (19).

10. Procédé selon l'une quelconque des revendications précédentes, **caractérisé en ce que** l'on tend le renfort (11) pendant le mouvement du moule (14; 21; 28), en particulier à l'intérieur du moule (14; 21; 28).

11. Dispositif de fabrication d'un profilé en plastique (10) de préférence courbé avec un moule (14; 21; 28), dans lequel un renfort continu (11) du profilé en plastique (10) peut être noyé dans du plastique liquide (12), **caractérisé en ce que** le moule (14; 21; 28) peut être déplacé en mouvement réciproque par rapport au profilé en plastique (10) le long de celui-ci.

12. Dispositif selon la revendication 11, **caractérisé en ce que**, considéré dans la direction de fabrication (19), au moins un moyen de maintien (20; 22, 23) pour le profilé en plastique terminé (10) sortant du moule (14; 21; 28) est disposé avant le moule (14; 21; 28), dans lequel le moyen de maintien respectif (20; 22, 23) est réalisé de préférence de façon à former une saisie libérable du profilé en plastique terminé (10) à l'extérieur du moule (14; 21; 28), en particulier avant le moule (14; 21, 28), et/ou le ou chaque moyen de maintien (20; 22, 23) peut être déplacé par rapport au profilé en plastique (10).

13. Dispositif selon la revendication 11 ou 12, **caractérisé en ce que** le moule (21; 28) et ledit au moins un moyen de maintien (22, 23) sont assemblés de façon mobile l'un à l'autre, de préférence de telle manière qu'une zone élastique (24) extensible et rétractable en alternance dans la direction longitudinale du profilé en plastique (10) soit disposée entre le moule (21; 28) et le moyen de maintien (22, 23) et éventuellement entre des moyens de maintien voisins (22, 23).

14. Dispositif selon la revendication 13, **caractérisé en ce que** les moyens de maintien entre eux (22, 23) et le moule (21; 28) avec un moyen de maintien voisin (22) sont reliés par les zones élastiques (24), dans lequel des actionneurs (26) pour l'extension et le retrait ciblés des zones élastiques (24) sont associés aux zones élastiques (24).

15. Dispositif selon l'une quelconque des revendications 11 à 14, **caractérisé en ce que** le moule (28) est formé de plusieurs parties de moule (29) reliées par des sections élastiques (30), dans lequel des actionneurs (32) sont associés aux sections (30) pour modifier la distance et/ou la direction des parties de moule (29) l'une par rapport à l'autre.

16. Dispositif selon la revendication 15, **caractérisé en ce que** les actionneurs (32) sont composés de plusieurs segments d'actionneur (33) de préférence identiques.
